# NEUE EUROPÄISCHE PATENTSCHRIFT

(11) **EP 1 475 608 B2**
(45) Veröffentlichungstag und Bekanntmachung des Hinweises auf die Entscheidung über den Einspruch: **21.05.2014**
(45) Hinweis auf die Patenterteilung: 09.09.2009
(21) Anmeldenummer: 04101932.4
(22) Anmeldetag: 05.05.2004
(51) Int. Cl.: G01C 15/00, G01S 7/51, G01S 17/08

(54) **Elektrooptisches Distanzhandmessgerät**
Electro-optical hand-held distance measuring apparatus
Appareil électro-optique portable à mesure de distance

(30) Priorität: 09.05.2003 DE 10320790
(43) Veröffentlichungstag der Anmeldung: 10.11.2004
(73) Patentinhaber: HILTI Aktiengesellschaft, 9494 Schaan (LI)
(72) Erfinder: Gogolla, Torsten, 9494, Schaan (LI); Spiegel, Armin, 9442, Berneck (CH); Winter, Andreas, 6800, Feldkirch (AT); Seifert, Helmut, 07616, Serba (DE); Kousek, Heinz, 6800, Feldkirch (AT)
(74) Vertreter: Wildi, Roland

(56) Entgegenhaltungen:
- EP-A- 0 828 165
- WO-A1-92/14986
- WO-A2-01/91978
- DE-A- 3 220 024
- DE-A1- 19 718 642
- DE-U1- 20 108 508
- FR-A- 2 614 982
- JP-A- 2005 181 728
- US-A- 5 287 627
- US-B- 5 426 863

## Beschreibung

Die Erfindung bezeichnet ein elektrooptisches Distanzhandmessgerät mit einem modulierten Lasermessstrahl.

Im Baugewerbe ist im Entfernungsbereich bis zu einigen 100 m die exakte Bestimmung der Distanz mit einer Genauigkeit von wenigen mm erforderlich. Die dazu geeignet ausgebildeten Laserdistanzhandmessgeräte verwenden zur Distanzmessung in der Regel ein Phasenlaufzeitdifferenzmessverfahren eines modulierten sichtbaren Laserstrahls als optisches Distanzmessmittel, indem ein mittels einer Kollimationsoptik gebündelter Messstrahl, vorzugsweise der sichtbare Lichtstrahl einer Laserdiode, auf die Oberfläche eines Messobjektes gerichtet wird. Die von dem auf dem Messobjekt positionierten Leuchtfleck des Messstrahls zurückgestreute oder reflektierte optische Strahlung wird mittels einer Empfangslinse auf die aktive Fläche eines Messfotodetektors fokussiert. Zur Distanzmessung wird der Messstrahl der Laserdiode in der Regel in seiner Intensität moduliert, d.h. dem Lichtstrahl wird ein Messsignal überlagert. Aus dem vom Messobjekt zurückgestreuten bzw. reflektierten, vom Messfotodetektor empfangenen und von der Empfängerelektronik aufbereiteten Signal wird mit Hilfe einer Auswerteeinheit die Signallaufzeit (bzw. die Signalphasenverschiebung) vom optischen Sender über das Messobjekt zum Detektor bestimmt. Die Messdistanz ergibt sich schließlich aus der Signallaufzeit und der Lichtgeschwindigkeit. Zur Distanzmessung wird stets eine Gegenfläche benötigt, die insbesondere im Baugewerbe bei Messungen bzw. Ablängungen in der Ebene von Wänden oder Böden zumeist nicht vorhanden sind.

EP 0828165 A2 offenbart ein elektrooptisches Handdistanzmessgerät mit einem handhabbaren Gehäuse und einem elektrooptischen Distanzmessmodul, das eine Strahlquelle, einen Strahlempfänger und ein Ausgabemittel für die ermittelte Distanz umfasst, ein mechanisches Distanzmessmittel ist nicht vorgesehen. Nach der DE 198 36 812 A1 weist ein elektrooptisches Distanzhandmessgerät ein handhabbares Gehäuse und ein elektrooptisches Distanzmessmodul mit einer elektrischen Strahlquelle zur Erzeugung eines optischen Messstrahls, einem Strahlempfänger, einem Display und einem Bedienelement auf. Zudem besitzt es neben der einfachen Distanzmessung einige zusätzliche Berechnungsfunktionen, wie die Messung von Flächen und Volumina sowie die Addition und Subtraktion von Distanzen. Sehr kurze Entfernungen von 0 bis 20 cm können durch die der Messstrahlrichtung vorgelagerte Gehäuselänge des elektrooptischen Distanzhandmessgerätes nicht direkt gemessen werden. Diese elektrooptischen Distanzhandmessgeräte sind insbesondere im Baugewerbe nicht ständig am Nutzer verfügbar, sondern werden in der Regel nur für zuvor geplante, spezielle Aufgaben mitgeführt.

Zur Messung von Distanzen von 0 bis 2 m wird in der Regel ein mechanisches Distanzmessmittel mit einer optisch ablesbaren Messskala eingesetzt. Mechanische Distanzmessmittel, wie das Messband und der Gliedermessstab, sind zudem klein, handlich und benötigen keine Anzielfläche. Distanzen bis 5 m werden in der Regel mit einem Messband erfasst. Der im professionellen Erscheinungsbild spezieller Berufsgruppen des Baugewerbes obligatorisch am Nutzer mitgeführte, bei der Distanzmessung allgegenwärtige, Gliedermessstab (Zollstock, Doppelmeter, Meterstab) ist insbesondere bei Distanzmessungen auf Armlänge ein sehr beliebtes, altbewährtes und unverzichtbares Hilfsmittel, weil die Messung einfach und schnell von statten geht. Es lassen sich zudem sehr gut Strichmarkierungen auf Wänden und Böden anbringen und (quasi in der Luft) virtuelle Bauteile vermessen. Bei mechanischen Distanzmessmitteln treten insbesondere vom Betrachtungswinkel abhängige objektive, durch Verschmutzung der Messskala oder simples Verzählen verursachte subjektive Ablesefehler als absolute Messfehler auf. Bei Abständen von mehreren Metern resultieren die distanzabhängigen Messfehler insbesondere aus einem schlecht definierten Anschlag- oder Messpunkt, dem Durchhang des Distanzmessmittel, Druck- bzw. Zugkräften sowie Alterung, Feuchtigkeit und thermische Ausdehnung des Distanzmessmittels. Die im Baugewerbe zumindest gelegentlich notwendige Genauigkeit einer Distanzmessung von wenigen mm ist mit dem in der Regel gerade nur verfügbaren mechanischen Distanzmessmittel dann nicht gewährleistet.

Nach der DE19916409 besteht ein Gliedermessstab aus zehn länglichen eigensteifen Gliedern einer Länge bis zu 23 cm, die miteinander jeweils alternierend endseitig drehschwenkbar arretierbar verbunden sind, wobei sich über einem längs einer Linie ausgeschwenkten Bereich zumindest eine optisch ablesbare Messskala für Distanzen erstreckt, die zumeist in mm oder Inch unterteilt und an einem als Referenzpunkt ausgebildeten Stirnende des Gliedermessstabs mit Null beginnend festgelegt ist.

Nach den US5713135, US5894675 sind verschiedenartige mechanische Messlehren für das Baugewerbe mit einem Laserpointer zur exakten Positionierung kombiniert. Nach der US 20020193964 weist ein Handdistanzmessgerät in einem handhabbaren Gehäuse ein aufgewickeltes, zur Messung von Distanzen ausgebildetes, Messband sowie zusätzlich einen Laserpointer als optischen Zeiger auf. Deren Laserstrahl ist jeweils nicht als Messstrahl ausgebildet. Zudem ist keine Empfangsoptik vorhanden. Aus der US 5287627 sind mehrere Ausführungsformen von Handdistanzmessgeräten bekannt. In einer ersten Ausführungsform umfasst das Handdistanzmessgerät ein als Maßband ausgebildetes, mechanisches Distanzmessmittel und ein Lasernivelliermodul, das für die elektrooptische Distanzmessung ungeeignet ist; in einer zweiten Ausführungsform umfasst das Handdistanzmessgerät ein akustisches Distanzmessmodul.

DE 20108508 U offenbart ein elektrooptisches Handdistanzmessgerät mit einem handhabbaren Gehäuse, einem Laserdistanzmessmodul und einem, als Teleskopstange ausgebildeten, mechanischen Distanzmessmittel. Die Distanzmessungen mit dem Laserdistanzmessmodul und der Teleskopstange erfolgen unabhängig voneinander und beziehen sich auf verschiedene Referenzpunkte; das Handdistanzmessgerät weist keinen gemeinsamen Referenzpunkt auf. Aus WO 92/14986 A und WO 01/91978 A sind weitere Handdistanzmessgeräte mit einem Distanzmessmodul und einem mechanischen Distanzmessmittel ohne gemeinsamen Referenzpunkt bekannt; die Distanzmessmodule sind als Ultraschallmessmodul oder Laserdistanzmessmodul ausgebildet.

Die Aufgabe der Erfindung besteht in der Realisierung eines Handdistanzmessgerätes, welches über große Distanzen hinreichend genau ist und bei der Messung kleiner Distanzen keine Anzielfläche benötigt. Ein weiterer Aspekt besteht in der Realisierung eines für vielfältige Aufgaben insbesondere im Baugewerbe universell einsetzbaren und praktikablen Handdistanzmessgerätes.

Die Aufgabe wird im Wesentlichen durch die Merkmale der unabhängigen Ansprüche gelöst. Vorteilhafte Weiterbildungen ergeben sich aus den Unteransprüchen.

Erfindungsgemäß weist ein elektrooptisches Handdistanzmessgerät mit einem handhabbaren Gehäuse und einem elektrooptischen Distanzmessmodul mit einer elektrischen Strahlquelle zur Erzeugung eines optischen Messstrahls, einem Strahlempfänger zum Empfang von Teilen des von einem Messobjekt zurückgestreuten Messstrahls und einem Ausgabemittel für die ermittelte Distanz, wobei mit dem Gehäuse zusätzlich ein verlängerbares mechanisches Distanzmessmittel mit einer optisch ablesbaren Messskala verbunden ist und das Handdistanzmessgerät einen gemeinsamen ersten Referenzpunkt sowohl für die Messung der Distanz mit dem mechanischen Distanzmessmittel als auch mit dem optischen Messstrahl aufweist.

Durch die Kombination eines elektrooptischen Handdistanzmessgerätes mit einem üblichen, universellen mechanischen Distanzmessmittel, mit welchem die Routinetätigkeiten in gewohnter und altbewährter Weise durchführbar sind, zu einem kombinierten Handdistanzmessgerät ist je nach Problemstellung das jeweils zweckentsprechende Distanzmessmittel wählbar. Insbesondere im Baugewerbe mit dem am Nutzer schier obligatorisch mitgeführten mechanischen Distanzmessmittel ist mit einem Handdistanzmessgerät neben Distanzmessungen ab Null sowie ohne Gegenfläche im Nahbereich nunmehr jederzeit bei unvorhersehbaren Messaufgaben eine Distanzmessung im Fernbereich mit der geforderten Genauigkeit durchführbar. Durch den gemeinsamen ersten Referenzpunkt für die Distanzmessung mit dem mechanischen Distanzmessmittel und die Distanzmessung mit dem elektrooptischen Distanzmessmodul sind ohne Lageänderung des Handdistanzmessgerätes beide Varianten der Distanzmessung möglich.

Vorteilhaft weist das Handdistanzmessgerät ein Verbindungselement auf, welches zu dem mechanischen Distanzmessmittel eine manuell lösbare Schnittstelle ausbildet, weiter vorteilhaft eine rastbare, wodurch das mechanische Distanzmessmittel als eigenständiges Modul für temporäre Hilfsaufgaben vom Handdistanzmessgerät trennbar ist.

Vorteilhaft weist das Handdistanzmessgerät ein von außen zugängliches Bedienelement, weiter vorteilhaft einen Drucktaster, zur Aktivierung des optischen Messstrahls und der Auslösung des optischen Distanzmessverfahrens auf, wodurch die optische Distanzmessung einfach manuell aktivierbar ist.

Vorteilhaft weist das elektrooptische Distanzmessmodul zusätzliche Berechnungsfunktionen einschließlich der Addition von Distanzen, weiter vorteilhaft die Subtraktion von Distanzen sowie die Berechnung von Flächen und Volumina auf, wodurch über Referenzdistanzen oder Mehrfachmessungen komplexe Messaufgaben lösbar sind.

Vorteilhaft weist das Handdistanzmessgerät ein mit dem mechanischen Distanzmessmittel verbundenes, weiter vorteilhaft internes, Steuermittel auf, weicher steuerbar mit dem elektrooptischen Distanzmessmodul verbunden ist, wodurch über das mechanische Distanzmessmittel das elektrooptische Distanzmessmodul steuerbar ist.

Vorteilhaft ist das Steuermittel als kontaktloser Sensor ausgebildet, weiter vorteilhaft als Hall-Sensor oder Photodektor, der sensitiv bezüglich der relativen Position des, den zweiten Referenzpunkt aufweisenden, mechanischen Distanzmessmittels zum Gehäuse ist, weiter vorteilhaft bezüglich in das mechanische Distanzmessmittel eingebrachte Permanentmagnete bzw. optisch transparente Löcher, wodurch das Steuermittel zuverlässiger, insbesondere schmutzunempfindlicher und verschleißbeständiger als ein mechanisch kontaktierendes Steuermittel ist.

Vorteilhaft stellt das bezüglich des Gehäuses in der Länge veränderbare Ende des mechanischen Distanzmessmittels einen zweiten Referenzpunkt dar, dessen Referenzdistanz zum ersten Referenzpunkt vom Handdistanzmessgerät über das Steuermittel detektierbar ist, wodurch diese Referenzdistanz dem elektrooptischen Distanzmessmodul, insbesondere einem integrierten Mikrocontroller, bekannt ist.

Vorteilhaft ist die vom Rechenmittel ermittelte Distanz von der Referenzdistanz abhängig, wodurch die Referenzdistanz insbesondere zur Lichtmessdistanz addierbar ist.

Bei einer Positionierung des zweiten Referenzpunktes am Fussboden und Handhabung des Handdistanzmessgerätes in Brusthöhe ist eine besonders ergonomische Nutzung möglich.

Vorteilhaft ist das Steuermittel mit einem Schaltmittel zur stromleitenden Verbindung des elektrooptischen Distanzmessmoduls mit einer Stromversorgung verbunden, wobei das Schaltmittel ausschließlich in einer zur mechanischen Distanzmessung notwendigen Position des mechanischen Distanzmessmittels gegenüber dem Gehäuse stromleitend geschlossen ist, wodurch nur die zweckentsprechende intuitive Betätigung des mechanischen Distanzmessmittels die Bereitschaft des Handdistanzmessgerätes zur optischen Distanzmessung herstellt, wodurch unbeabsichtigte Distanzmessungen vermieden werden, welche die Stromquelle vorzeitig entleeren.

Vorteilhaft ist das mechanische Distanzmessmittel ein Messband, weiter vorteilhaft ein eigenversteifend federnd vorgespanntes Stahlmessband, wodurch dieses kontinuierlich verlängerbar sowie innerhalb des Gehäuses des Handdistanzmessgerätes auf engstem Raum aufwickelbar ist.

Alternativ vorteilhaft ist das mechanische Distanzmessmittel ein Gliedermessstab, wodurch das mechanische Distanzmessmittel in Form eines eigensteifen, stückweise verlängerbaren Messstabes ausgebildet ist, der einhändig im Raum frei orientierbar ist. Zudem sind Messungen an unzugänglichen Stellen, wie die Tiefe von Bohrungen, einfach durch Einführen des Messstabes ausführbar.

Vorteilhaft weist der Gliedermessstab mehrere, weiter vorteilhaft 5 bis 15, optimal genau 10, längliche eigensteife Glieder auf, die miteinander jeweils alternierend endseitig drehschwenkbar arretierbar verbunden sind, deren Länge zwischen 10 cm und 30 cm, optimal 23 cm beträgt, wodurch die Länge und der Zoomfaktor dem Nutzer durch einen handelsüblichen Gliedermessstab vertraut ist.

Die Erfindung wird bezüglich eines vorteilhaften Ausführungsbeispiels näher erläutert mit:
- Fig. 1a - 1c: als elektrooptisches Handdistanzmessgerät in drei Projektionsdarstellungen
- Fig. 2: als Variante

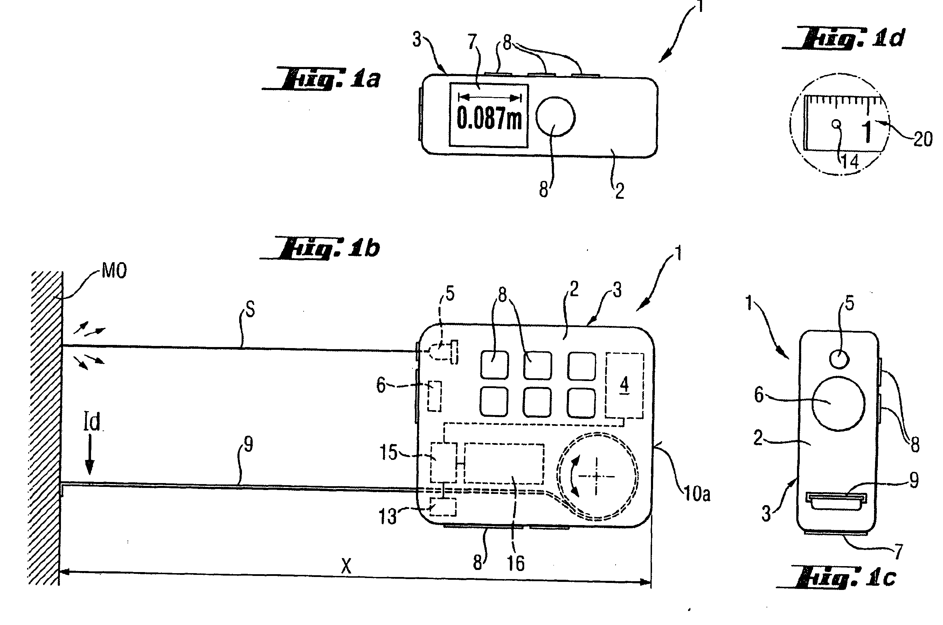

Nach den Fig. 1a - 1c, welche drei kartesische Projektionen zeigen, weist ein elektrooptisches Handdistanzmessgerät 1 ein handhabbares Gehäuse 2 und ein elektrooptisches Distanzmessmodul 3 auf. Das Distanzmessmodul 3 weist ein Rechenmittel 4 in Form eines eingebetteten Mikrocontrollers, eine elektrische Strahlquelle 5 in Form einer Laserdiode mit Kollimationsoptik, die einen optischen Messstrahl S erzeugt, einem gleich orientierten Strahlempfänger 6, ein Ausgabemittel 7 in Form eines alphanumerischen Displays für die von dem Mikrocontroller 4 ermittelte Distanz X und von aussen zugängliche Bedienelemente 8 in Form eines Drucktasters für die Distanzmessung und weiterer Funktionstasten für Sonderfunktionen des Rechenmittels 4 zur Addition und Subtraktion von Distanzen sowie die Berechnung von Flächen und Volumina auf. In dem Gehäuse 2 ist zusätzlich ein aufgewickeltes, in Strahlrichtung des optischen Messstrahls 5 herausziehbares, Messband 9 aus eigenversteifend federnd vorgespanntem Stahl angeordnet. Sowohl für die Distanzmessung mittels einer optisch ablesbaren Messskala 20 am Messband 9 als auch mittels des optischen Messstrahles 5 bildet die Gegenseite des Handdistanzmessgerätes 1 einen gemeinsamen ersten Referenzpunkt 10a aus. Ein intern im Handdistanzmessgerät 1 angeordnetes Steuermittel 13 in Form eines, für ein am Stirnende des Messbandes 9 angeordnetes Loch 14, sensiblen Photodetektors ist mit einem in Form eines elektronischen Schalters ausgebildeten Schaltmittel 15 verbunden. Dieser verbindet das elektrooptische Distanzmessmodul 3 stromleitend mit einer Stromversorgung 16 in Form einer Batterie nur im Falle eines zur Distanzmessung intuitiv etwas herausgezogenen Messbandes 9.

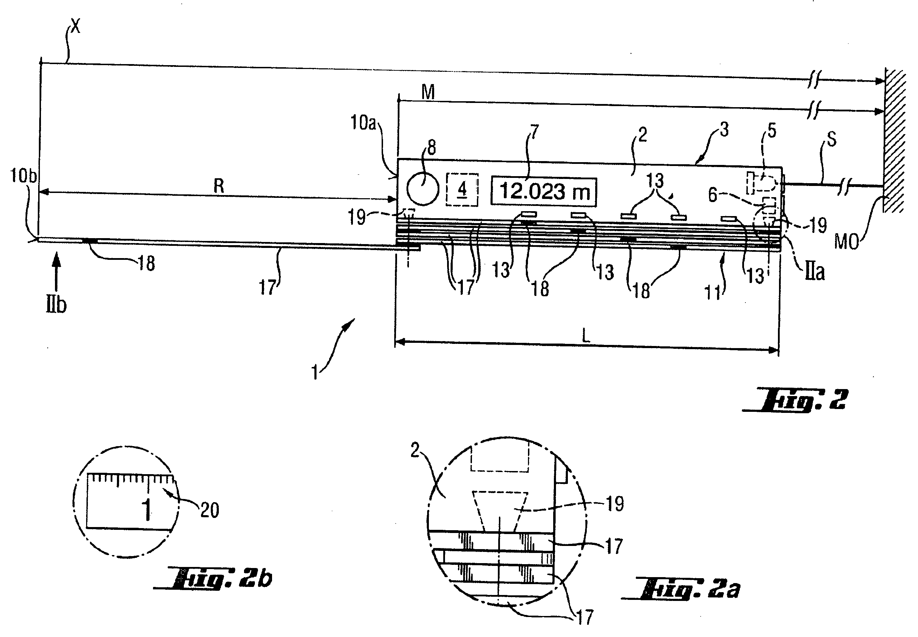

Nach Fig. 2 ist das handhabbare Gehäuse 2 bündig mit einem Gliedermaßstab 11 mit fünf eigensteifen, drehschwenkbaren Gliedern 17 und einer zusammengefalteten Länge L von 23 cm verbunden. Das Handdistanzmessgerät 1 weist ein internes Steuermittel 13 in Form von fünf, längs beabstandeter Hall-Sensoren auf, die das elektrooptische Distanzmessmodul 3 kontaktlos steuern, indem sie bezüglich Permanentmagneten 18 sensibel sind, die im Gliedermaßstab 11 an unterschiedlichen Positionen in verschiedenen Gliedern 17 eingebracht sind. Indem das Rechenmittel 4 die Anzahl der ausgeschwenkten Glieder 17 detektiert, dessen stirnseitiges Ende einen zweiten Referenzpunkt 10b ausbildet, berechnet das Rechenmittel 4 in Form des Mikrocontrollers eine Referenzdistanz R vom ersten Referenzpunkt 10a zum zweiten Referenzpunkt 10b. Diese Referenzdistanz R wird bei der Ermittlung einer, vom zweiten Referenzpunkt 10b ausgehenden, Distanz X zu einer vom optischen Messstrahl 5 in der Gegenrichtung gemessenen Lichtmessdistanz M hinzu addiert. Das Handdistanzmessgerät 1 weist ein Verbindungselement 19 in Form einer quer einrastbaren Schwalbenschwanzführung auf, die eine manuell lösbare Schnittstelle zu dem, mit einem zugeordneten Schwalbenschwanz ausgeformten, modular eigenständigen Gliedermaßstab 11 mit einer optisch ablesbaren Messskala 20 ausbildet.

## Patentansprüche

1. Elektrooptisches Handdistanzmessgerät mit einem handhabbaren Gehäuse (2) und einem elektrooptischen Distanzmessmodul (3) mit einer elektrischen Strahlquelle (5) zur Erzeugung eines optischen Messstrahls (S), einem Strahlempfänger (6) zum Empfang von Teilen des von einem Messobjekt (MO) zurückgestreuten Messstrahls (S) und einem Ausgabemittel (7) für die ermittelte Distanz (X), **dadurch gekennzeichnet, dass** mit dem Gehäuse (2) zusätzlich ein verlängerbares mechanisches Distanzmessmittel (9, 11) mit einer optisch ablesbaren Messskala verbunden ist und das Handdistanzmessgerät einen gemeinsamen ersten Referenzpunkt (10a) sowohl für die Messung der Distanz (X) mit dem mechanischen Distanzmessmittel (9,11) als auch mit dem optischen Messstrahl (S) aufweist.

2. Handdistanzmessgerät nach Anspruch 1, **dadurch gekennzeichnet, dass** ein Verbindungselement (19) vorhanden ist, welches zu dem mechanischen Distanzmessmittel (9, 11) eine manuell lösbare Schnittstelle ausbildet.

3. Handdistanzmessgerät nach Anspruch 1 oder 2, **dadurch gekennzeichnet, dass** ein von aussen zugängliches Bedienelement (8) zur Aktivierung des optischen Messstrahls (S) und der Auslösung des optischen Distanzmessverfahrens vorhanden ist, optional einen Drucktaster.

4. Handdistanzmessgerät nach einem der Ansprüche 1 bis 3, **dadurch gekennzeichnet, dass** das elektrooptische Distanzmessmodul (3) ein Rechenmittel (4) mit zusätzlichen Berechnungsfunktionen einschliesslich der Addition von Distanzen aufweist, optional einschliesslich der Subtraktion von Distanzen sowie der Berechnung von Flächen und Volumina.

5. Handdistanzmessgerät nach einem der vorherigen Ansprüche, **dadurch gekennzeichnet, dass** es ein mit dem mechanischen Distanzmessmittel (9, 11) verbundenes Steuermittel (13) aufweist, das steuerbar mit dem elektrooptischen Distanzmessmodul (3) verbunden ist.

6. Handdistanzmessgerät nach Anspruch 5, **dadurch gekennzeichnet, dass** das Steuermittel (13) als zumindest ein kontaktloser Sensor ausgebildet ist, der sensitiv bezüglich der relativen Position des mechanischen Distanzmessmittels (9, 11) zum Gehäuse (2) ist, optional ein Hall-Sensor oder Photodektor, der sensitiv bezüglich eines in das mechanische Distanzmessmittel (9, 11) eingebrachten Permanentmagneten (18) bzw. optisch transparenten Loches (14) ist.

7. Handdistanzmessgerät nach Anspruch 5 oder 6, **dadurch gekennzeichnet, dass** das bezüglich des Gehäuses (2) in der Länge veränderbare Ende des mechanischen Distanzmessmittels (9, 11) einen zweiten Referenzpunkt (10b) darstellt, dessen Referenzdistanz (R) zum ersten Referenzpunkt (10a) vom Rechenmittel (4) über das Steuermittel (13) detektierbar ist.

8. Handdistanzmessgerät nach Anspruch 7, **dadurch gekennzeichnet, dass** die vom Rechenmittel (4) ermittelte Distanz (X) von der Referenzdistanz (R) abhängig ist.

9. Handdistanzmessgerät nach einem der Ansprüche 5 bis 8, **dadurch gekennzeichnet, dass** das Steuermittel (13) mit einem Schaltmittel (15) zur stromleitenden Verbindung des elektrooptischen Distanzmessmoduls (3) mit einer Stromversorgung (16) verbunden ist, wobei das Schaltmittel (15) ausschliesslich in einer zur mechanischen Distanzmessung notwendigen Position des mechanischen Distanzmessmittels (9, 11) gegenüber dem Gehäuse (2) stromleitend geschlossen ist.

10. Handdistanzmessgerät nach einem der vorherigen Ansprüche, **dadurch gekennzeichnet, dass** das mechanische Distanzmessmittel ein Messband (9) ist, optional ein eigenversteifend federnd vorgespanntes Stahlmessband.

11. Handdistanzmessgerät nach einem der Ansprüche 1 bis 9, **dadurch gekennzeichnet, dass** das mechanische Distanzmessmittel ein Gliedermessstab (11) ist.

12. Handdistanzmessgerät nach Anspruch 11, **dadurch gekennzeichnet, dass** der Gliedermessstab (11) zwischen 5 bis 15 drehschwenkbare Glieder (17) aufweist, deren Länge (L) zwischen 10 cm und 30 cm beträgt.

## Claims

1. Hand-held electro-optical distance measuring tool with a hand-held casing (2) and an electro-optical distance measuring module (3) with an electrical beam source (5) for generating an optical measuring beam (S), a beam receiver (6) for receiving parts of the measuring beam (S) back-scattered from a measured object (MO), and an output means (7) for the distance obtained (X), **characterized in that** an extensible mechanical distance measuring means (9, 11) with a visually readable measurement scale is additionally connected to the casing (2) and the hand-held distance measuring tool has a common first reference point (10a) for measuring the distance (X) both with the mechanical distance measuring means (9, 11) and with the optical measuring beam (S).

2. Hand-held distance measuring tool according to Claim 1, **characterized in that** a connecting element (19) forming a manually releasable interface to the mechanical distance measuring means (9, 11) is provided.

3. Hand-held distance measuring tool according to Claim 1 or Claim 2, **characterized in that** an externally accessible control element (8), optionally a push button, for activating the optical measuring beam (S) and triggering the optical distance measuring process is provided.

4. Hand-held distance measuring tool according to any one of Claims 1 to 3, **characterized in that** the electro-optical distance measuring module (3) has a calculating means (4) with additional calculation functions including the addition of distances and optionally including the subtraction of distances and the calculation of areas and volumes.

5. Hand-held distance measuring tool according to any one of the preceding claims, **characterized in that** it has a control means (13) connected to the mechanical distance measuring means (9, 11) and controllably connected to the electro-optical distance measuring module (3).

6. Hand-held distance measuring tool according to Claim 5, **characterized in that** the control means (13) is configured as at least one contactless sensor sensitive to the position of the mechanical distance measuring means (9, 11) relative to the casing (2), optionally a Hall sensor or photodetector respectively sensitive to a permanent magnet (18) or an optically transparent hole (14) incorporated into the mechanical distance measuring means (9, 11).

7. Hand-held distance measuring tool according to Claim 5 or Claim 6, **characterized in that** the end of the mechanical distance measuring means (9, 11) which is variable in length with respect to the casing (2) constitutes a second reference point (10b) whose reference distance (R) from the first reference point (10a) can be ascertained by the calculating means (4) via the control means (13).

8. Hand-held distance measuring tool according to Claim 7, **characterized in that** the distance (X) determined by the calculating means (4) is governed by the reference distance (R).

9. Hand-held distance measuring tool according to any one of Claims 5 to 8, **characterized in that** the control means (13) is connected to a switching means (15) for electrically connecting the electro-optical distance measuring module (3) to a power supply (16), the conductive connection to the switching means (15) being made only when the mechanical distance measuring means (9, 11) is in a necessary position for mechanical distance measurement relative to the casing (2).

10. Hand-held distance measuring tool according to any one of the preceding claims, **characterized in that** the mechanical distance measuring means is a measuring tape (9), optionally a self-stiffeningly springily pretensioned steel measuring tape.

11. Hand-held distance measuring tool according to any one of Claims 1 to 9, **characterized in that** the mechanical distance measuring means is a jointed rule (11).

12. Hand-held distance measuring tool according to Claim 11, **characterized in that** the jointed rule (11) has between 5 and 15 hinged sections (17) whose length (L) is between 10 cm and 30 cm.

## Revendications

1. Appareil manuel électro-optique de mesure de distance, comprenant un boîtier portatif (2) et un module électro-optique de mesure de distance (3) pourvu d'une source électrique de rayonnement (5) pour générer un faisceau optique de mesure (S), d'un récepteur de faisceau (6) pour recevoir des parties du faisceau de mesure (S) renvoyé par un objet de mesure (MO) et d'un moyen de sortie (7) pour la distance calculée (X), **caractérisé en ce que**, en plus, un moyen mécanique étirable de mesure de distance (9, 11) avec une graduation de mesure lisible optiquement est relié au boîtier (2), et l'appareil manuel électro-optique de mesure de distance comprend un premier point de référence commun (10a) pour la mesure de la distance X aussi bien avec le moyen mécanique de mesure de distance (9, 11) qu'avec le faisceau optique de mesure (S).

2. Appareil manuel de mesure de distance selon la revendication 1, **caractérisé en ce qu'**il est prévu un élément de liaison (19) qui, par rapport au moyen mécanique de mesure de distance (9, 11), forme une interface détachable manuellement.

3. Appareil manuel de mesure de distance selon la revendication 1 ou 2, **caractérisé en ce qu'**un élément d'actionnement (8) accessible de l'extérieur, optionnellement un bouton-poussoir, est prévu pour activer le faisceau optique de mesure (S) et déclencher le processus optique de mesure de distance.

4. Appareil manuel de mesure de distance selon une des revendications 1 à 3, **caractérisé en ce que** le module électro-optique de mesure de distance (3) comprend un moyen de calcul (4) avec des fonctions de calcul supplémentaires, y compris l'addition de distances, optionnellement y compris la soustraction de distances ainsi que le calcul de surfaces et de volumes.

5. Appareil manuel de mesure de distance selon une des revendications précédentes, **caractérisé en ce qu'**il comporte un moyen de commande (13) qui est relié au moyen mécanique de mesure de distance (9, 11) et qui est relié de manière commandée au module électro-optique de mesure de distance (3).

6. Appareil manuel de mesure de distance selon la revendication 5, **caractérisé en ce que** le moyen de commande (13) est conformé en au moins un capteur sans contact qui est sensible à la position relative du moyen mécanique de mesure de distance (9, 11) par rapport au boîtier (2), optionnellement en un capteur Hall ou un photodétecteur qui est sensible à un animant permanent (18) inséré dans le moyen mécanique de mesure de distance (9, 11), respectivement à un trou optiquement transparent (14).

7. Appareil manuel de mesure de distance selon la revendication 5 ou 6, **caractérisé en ce que** l'extrémité du moyen mécanique de mesure de distance (9, 11) modifiable en longueur par rapport au boîtier (2) constitue un second point de référence (10b) dont la distance de référence (R) au premier point de référence (10a) par rapport au moyen de calcul (4) est détectable par l'intermédiaire du moyen de commande (13).

8. Appareil manuel de mesure de distance selon la revendication 7, **caractérisé en ce que** la distance (X) déterminée par le moyen de calcul (4) est fonction de la distance de référence (R).

9. Appareil manuel de mesure de distance selon une des revendications 5 à 8, **caractérisé en ce que** le moyen de commande (13) est relié à un moyen de commutation (15) pour la liaison électroconductrice du module électro-optique de mesure de distance (3) à une alimentation en courant (16), le moyen de commutation (15) n'étant fermé de manière électroconductrice que lorsque le moyen mécanique de mesure de distance (9, 11) se trouve, par rapport au boîtier (2), dans une position nécessaire à la mesure mécanique de distance.

10. Appareil manuel de mesure de distance selon une des revendications précédentes, **caractérisé en ce que** le moyen mécanique de mesure de distance est un ruban de mesure (9), optionnellement un ruban de mesure en acier autorigide à précontrainte élastique.

11. Appareil manuel de mesure de distance selon une des revendications 1 à 9, **caractérisé en ce que** le moyen mécanique de mesure de distance est une règle graduée pliante (11).

12. Appareil manuel de mesure de distance selon la revendication 11, **caractérisé en ce que** la règle graduée pliante (11) comporte 5 à 15 branches pivotantes (17) dont la longueur (L) est comprise entre 10 cm 30 cm.
